# EUROPEAN PATENT APPLICATION

(11) **EP 1 308 764 A2**
(43) Date of publication of application: **07.05.2003**
(21) Application number: 02292702.4
(22) Date of filing: 30.10.2002
(51) Int. Cl.: G02B 7/00

(54) **Passive temperature compensating fixture for optical grating devices**

(30) Priority: 01.11.2001 US 985041
(71) Applicant: Alcatel Optronics Canada Ltd., Gatineau, Québec J8T 8J7 (CA)
(72) Inventor: Albert, Jacques, Hull, Québec J9A 1K4 (CA)
(74) Representative: Lenne, Laurence

(57) **Abstract**

A system and method of compensating for the thermal dependence of fiber optic devices, such as Bragg gratings, are described. Fiber optic devices such as Bragg filters are subject to change as a function of temperature. If the device contains a grating which is written to perform a function at a specific central wavelength, a slight increase in length of the device and hence an increase in the grating spacing due to an increase in temperature will change the central wavelength. The present invention provides a two-part substrate structure with each part having a different coefficient of thermal expansion. The fiber optic device is attached under tension to one part of the substrate that has, for example, a low coefficient of thermal expansion. This part has a channel on the side opposite to the fiber optic device and a second part of the substrate structure is held within the channel. The second part has a high coefficient of thermal expansion. Thus, when the temperature increases the first part of the substrate is forced to bend upwards which changes the stress on the fiber optic device such that the operating wavelength is compensated by an amount equal to the thermally induced change.

## Description

This invention relates to fiber optic devices such as fiber gratings and more particularly to an apparatus to compensate for the thermal dependence of such devices.

The Bragg effect is employed in optical communications systems for, amongst other things, wave length selective filtering. In this implementation the filter is used in add/drop wavelength applications and in multiplexing and demultiplexing functions. Bragg filters are also used in Mach-Zehnder interferometer applications for various optical communication related functions.

A grating is a series of perturbations in a optical wave guide precisely positioned according to a desired wavelength effect. It is known that such gratings are thermally dependent wherein the spacing between perturbations and the refractive index of the waveguide materials actually increase with increasing temperature. This temperature dependence, if not compensated for, will change the effective central wavelength of the grating as a function of operating temperature.

There are known methods of incorporating thermal compensation strategies into fiber optical devices. The first such method to be described here involves a package consisting of a holding tube and a pair of threaded, smaller tubes designed to fit within the holding tube. The holding tube is made of a material that has a different coefficient of thermal expansion (CTE) than that of the threaded tubes. The grating is fixed to the smaller tubes in such a way that it is strained by an amount designed to compensate for its temperature dependence when the temperature changes. Strain arises because of the different coefficients of thermal expansion of the two kinds of tubes. U.S. Patent 5,914,972 which issued June 22, 1999 to Siala et al. describes one such package. U.S. Patent 5,042,898 which issued August 27, 1991 to Morey et al. describes a similar arrangement and includes discussion regarding the thermal dependence of a grating.

A second solution consists of fixing the grating, whether it be a fiber Bragg grating or a Mach-Zehnder interferometer, to a substrate and then gluing the substrate to a bi-metal plate. The bi-metal plate is composed of two materials, each with a different coefficient of thermal expansion, sandwiched in such a way that when the temperature changes the bi-metal plate bends. The bending of the bi-metal plate induces a strain on the substrate affixed to it which is proportional to the length of the bi-metal plate. It is this strain which compensates for the temperature dependence of the grating. U.S. Patent 5,978,539 which issued November 2, 1999 to Davis et al. describes a variant of this concept.

A third approach consists of fixing the fiber Bragg grating or Mach-Zehnder interferometer to a special substrate that has a negative coefficient of thermal expansion of exactly the correct value so that it shrinks by just the right amount to compensate for the thermal variation of the spectral response of the device. U.S. Patent 5,926,599 which issued July 20,1999 to Bookbinder et al. gives one example of this approach.

Finally there is an approach described in International application
WO 00/54082 published September 14, 2000 to Maaskant et al. that describes a shaped substrate that is designed to bend in a controlled fashion in response to temperature variations. The fiber device is attached to the substrate in such a way that the bending action changes the amount of tension on the fiber device in response to temperature changes.

All of the above prior art solutions have limitations. In the bi-metal case it is not possible to have a manual adjustment of the tension at a given temperature and it has proven difficult in practice to find a glue for attaching the bi-metal to the substrate which holds the optical device such as a Mach-Zehnder interferometer. The glues which have been tested fail the damp-heat testing requirements. Materials with the proper negative coefficient of thermal expansion and the other necessary physical properties to pass all the environmental tests for optical devices are both rare and expensive. Furthermore, in the case of the Mach-Zehnder interferometer the coupler section must not be subject to variable tension during temperature cycling. On a negative coefficient of thermal expansion substrate everything moves with temperature. The shaped substrate idea is not applicable to the Mach-Zehnder interferometer device because there are sections of that device which must not be under variable tension during temperature cycling, for example, the couplers.

Accordingly, there is a need for a method and apparatus for simply and reliably compensating for the temperature dependence of fiber optical devices such as Bragg gratings and Mach-Zehnder interferometers.

The present invention is based on a modification of the aforementioned bi-metal approach whereby the use of glue to hold the substrate to the bi-metal strip is rendered unnecessary. According to the present design a bi-metal element comprising two components is used. Instead of gluing a bi-metal plate to the fiber device substrate, the substrate itself is used as the first component of the bi-metal element and is shaped in such a way that the second component of the bi-metal element forces it to curve by pushing against it when subject to a temperature increase. The curvature of the first component of the bi-metal element changes the strain state of the fiber attached to it. The main component of the force acting to curve the fiber device is therefore held mechanically instead of relying on the sheer strength of a glue.

Therefore, in accordance with a first aspect of the present invention there is provided an apparatus for use in compensating for the thermal dependence of a fiber optics device comprising: a substrate component of a material having a first coefficient of thermal expansion, the substrate having first and second opposed surfaces, characterized in that said substrate has spaced attachment means on the first surface for securing the fiber optics device and a channel on the second surface, the channel being located substantially between the spaced attachment means; and in that said apparatus comprises a spacer element of a material having a second coefficient of thermal expansion fixed within the channel whereby the differential in thermal expansion between the substrate component and the spacer element results in a curvature of the substrate and consequently a compensating strain being applied to a fiber optics device attached to the substrate.

In accordance with a second aspect of the present invention there is provided a method of compensating for the thermal dependence of a fiber optic device comprising: attaching the fiber optic device to a substrate component having a first coefficient of thermal expansion, characterized in that said substrate component has spaced apart attachment means on a first surface and a channel on a second, opposite surface, the channel being located substantially between the spaced apart attachment means; and in that said method comprises a step of securing a spacer having a second coefficient of thermal expansion in the channel such that the differential in thermal expansion between the substrate component and the spacer exerts a compensating stress on a fiber optic device attached to the substrate.

In accordance with a third aspect of the present invention there is provided a fiber optic device having compensation for thermal dependence comprising: a substrate component of a material having a first coefficient of thermal expansion, characterized in that said substrate component has said fiber optic device attached thereto under tension by spaced apart attachment means, the substrate component further having a channel in a face opposite to the attachment means; said fiber optic device comprising a spacer fixed in the channel, the spacer of a material having a second coefficient of thermal expansion; wherein a differential in thermal expansion between the substrate component and the spacer causes a compensating stress to be exerted on the fiber optic device in response to a change in operating temperature.

The invention will now be described in greater detail with reference to the attached drawings wherein;
Figure 1 shows a cross sectional view of a first embodiment of the present invention;
Figure 2 shows a cross sectional view of a second embodiment of the present invention;
Figure 3 shows a cross sectional view of a further embodiment of the present invention;
Figure 4 shows a cross sectional view of a fourth embodiment of the present invention;
Figure 5A shows a cross sectional view of a fifth embodiment of the present invention; and
Figure 5B illustrates the layout of a Mach-Zehnder device shown to illustrate the usefullness of the embodiment.

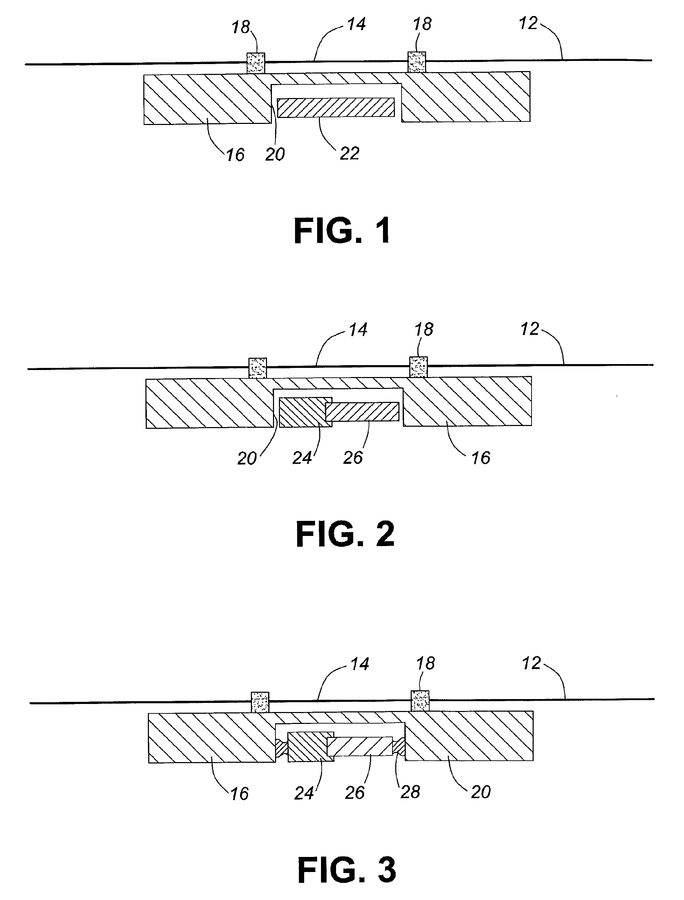

As previously described, fiber Bragg gratings and Mach-Zehnder interferometers (MZI) have a temperature dependence wherein the central wave length of the device changes with a change in operating temperature. In the basic embodiment shown in Figure 1 the fiber 12 which contains the grating or MZI 14, is attached to the first half of a substrate 16 using, for example, a glue at attachment points 18. Suitable glues will include various forms of epoxy which are capable of withstanding the aforementioned damp-heat testing specifications. It is also within the scope of the invention to attach the fiber 12 to the substrate 16 using a form of solder. As shown in Figure 1 the fiber 12 is under tension when it is attached to the substrate. The initial tension is created by slightly stretching the fiber by an amount dependent on the thermal characteristics of the fiber device. In a preferred embodiment the substrate component 16 has a low coefficient of thermal expansion. Materials such as silica or certain metals can be used.

As shown in Figure 1 a channel or slot 20 is provided in the substrate section with the channel more or less underlying the attachment points 18 for the fiber and extending across the width of the substrate component. A spacer 22 of a high coefficient of thermal expansion material is selected to fit tightly within this channel or slot 20. If the spacer material is correctly selected it will expand with temperature by an amount which will cause the low coefficient of thermal expansion material of the substrate component 16 to be bent upwardly at the ends which in turn will lower the tension on the grating device. This, in effect, will change the strain on the fiber between attachment points by an amount which compensates for the increase in Bragg grating central wavelength due to the temperature increase. Hence, the grating wavelength remains constant in spite of a temperature change. A fine tuning of the change of strain with temperature may be achieved by slightly changing the position of the attachment points along the substrate. This may be used to fine tune the thermal compensation of the Bragg wavelength.

Figure 2 shows a second embodiment of this configuration in which the spacer element is comprised of two sections 24, 26. The first section 24 is a threaded tube and the second section 26 is a screw which is designed to threadingly engage the threaded tube 24. It will be apparent to one skilled in the art that by adjusting the screw the amount of tension applied to the spacer and hence the basic adjustment to the tension on the fiber device attached to the attachment points can be altered. This is used to fine tune the initial tension on the grating and hence the wavelength of operation of the device. In a preferred embodiment both the threaded tube and the screw are made of a high coefficient of thermal expansion material although it is within the scope of the invention that just one of these elements will be of a high coefficient of thermal expansion material.

Figure 3 illustrates a further embodiment of the invention in which the spacer element (24, 25) is actually attached to the walls of the channel 20 in the substrate component 16. In a preferred embodiment this securement is by way of a suitable solder 28 although it is conceivable that an appropriate glue or epoxy can be found to make a solid connection. Using the fixed connection to the substrate component it is possible for the spacer to bend the substrate in either direction thereby altering the stress on the fiber from a compression to a tension and vice versa. In this embodiment it is conceivable that a high coefficient of thermal expansion material could be used for the substrate and a low coefficient of thermal expansion material could be used for the spacer. However, when the spacer has the low thermal expansion coefficient the glue or solder is required to "hold" the bending stress in tension. This is difficult to achieve for currently known materials, especially considering the reliability specifications required. This concern is the primary reason why the embodiment in which the spacer pushes against the substrate is preferred. It is conceivable however that in the future better materials or bonding processes become available which would make the inverse configuration feasible.

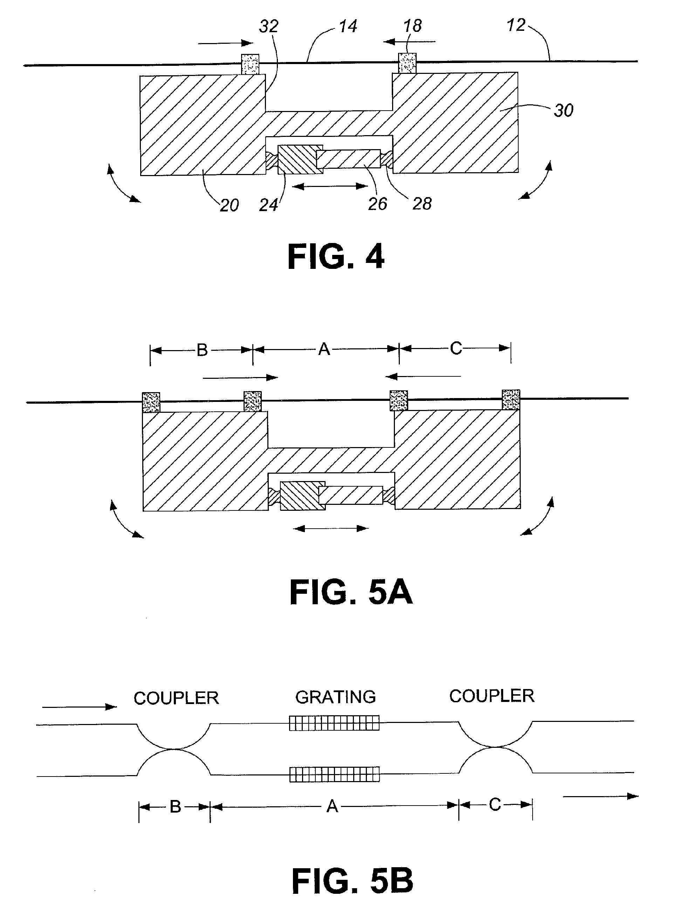

A further embodiment involves a variation of the shape of the substrate component. As noted in Figure 4 the substrate component 30 is thicker and a second channel 32 is formed in the top surface between the attachment points. This, in effect, raises the contact points 18 for the grating above the curvature plane which achieves larger strains on the fiber for a given value of curvature. In this embodiment the spacer element 24, 26 can be either glued or soldered or inserted with a pressure fit construction.

In a final embodiment as shown in Figure 5A, additional attachment points are provided on the substrate to accommodate optical fiber devices made up of different sections requiring different elongation rates under thermal variations. For instance, a Mach-Zehnder device (which is one of the main applications of the current invention) is shown in Figure 5B. This device requires, in addition to the attachment points at the outer ends of the gratings (section "A" on the drawings), further attachment points at the outer ends of the coupler sections. However these coupler sections, identified as "B" and "C" must not be subject to excessive length variations upon temperature cycling. This embodiment satisfies that constraint to a great extent since the greatest dimensional change resulting from the bending of the substrate occurs over section "A".

According to the present invention there is no need for a high-shear-strength glue to hold a bi-metal plate to the fiber or the Mach-Zehnder interferometer substrate. Furthermore, the initial curvature can be adjusted to fine tune the wavelength of operation of the grating device after it is fixed to the substrate. The device easily allows for compensating a Mach-Zehnder device when multiple contact points are needed. Multiple contact points may be needed because the strain must be restricted to the central portion of the device i.e. where the gratings are located while the portions of the substrate containing the fused couplers are left under constant strain with temperature. Furthermore, the substrate materials needed are relatively easy to find and inexpensive while allowing various amounts of compensation by proper design of the dimensions.

The system of the present invention may slightly increase the cost associated with the added machining of the substrate parts. Care must be used in selecting a material for the top substrate portion in as much as material such as silica may be scratched when pushed with a high coefficient of thermal expansion material used as a spacer. Therefore, a low coefficient of thermal expansion metal may be required for the top part of the substrate. This may provide some advantages as it may be easier to solder or glue the grating device to a metal rather than to silica. However, when a Mach-Zehnder device must be exposed to UV light or writing the gratings a clear path must be provided in the two parts of the substrate for the UV light to go through. This again involves extra machining of the substrate components.

While particular embodiments of the invention has been described and illustrated it will be apparent to one skilled in the art that numerous changes can be made to the basic concept. It is to be understood that such changes will fall within the full scope of the invention as defined by the appended claims.

## Claims

1. Apparatus for use in compensating for the thermal dependence of a fiber optics device comprising:
a substrate of a material having a first coefficient of thermal expansion, said substrate having first and second opposed surfaces **characterized in that** said substrate has spaced attachment means on said first surface for securing said fiber optics device and a channel on said second surface, said channel being located substantially between said spaced attachment means; and
and **in that** said apparatus comprises a spacer element of a material having a second coefficient of thermal expansion fixed within said channel whereby the differential in thermal expansion between said substrate and said spacer element results in a curvature of the substrate and consequently to a compensating strain being applied to a fiber optics device attached to said substrate.

2. Apparatus according to claim 1 wherein said substrate is made of a material having a low coefficient of thermal expansion and said spacer is made of a material having a high coefficient of thermal expansion.

3. Apparatus according to any one of claims 1 or 2 wherein said spacer element includes length adjustment means.

4. Apparatus according to claim 3 wherein said length adjustment means has a first threaded tube and a second screw component threadedly engaging said threaded tube.

5. Apparatus according to any one of claims 1 to 4 wherein said substrate has a second channel on said first surface between said spaced attachment means.

6. Method of compensating for the thermal dependence of a fiber optic device comprising:
attaching said fiber optic device to a substrate having a first coefficient of thermal expansion, **characterized in that** said substrate has spaced apart attachment means on a first surface and a channel on a second, opposite surface, said channel being located substantially between said spaced apart attachment means; and
**in that** said method comprises a step of securing a spacer having a second coefficient of thermal expansion in said channel such that the differential in thermal expansion between the substrate and the spacer exerts a compensating stress on a fiber optic device attached to said substrate.

7. Method according to claim 6 wherein said fiber optic device is attached to said substrate under tension.

8. Method according to any one of claim 6 or 7 wherein said spacer element has length adjustment means whereby said tension can be adjusted.

9. Fiber optic device having compensation for thermal dependence comprising:
a substrate of a material having a first coefficient of thermal expansion, **characterized in that** said substrate has said fiber optic device attached thereto under tension by spaced apart attachment means, said substrate further having a channel in a face opposite to the attachment means; and said fiber optic device comprising a spacer fixed in said channel, said spacer of a material having a second coefficient of thermal expansion;
wherein a differential in thermal expansion between said substrate and said spacer causes a compensating stress to be exerted on said fiber optic device in response to a change in operating temperature.

10. Fiber optic device according to claim 9 attached to said substrate under tension.

11. Fiber optic device according to any one of claims 9 or 10 wherein said substrate is made of a material having a low coefficient of thermal expansion and said spacer is made of a material having a high coefficient of thermal expansion.

12. Fiber optic device according to any one of claims 9 to 11 wherein said spacer has length adjustment means to adjust tension on said device.
